# EUROPÄISCHE PATENTSCHRIFT

(11) **EP 2 378 090 B1**
(45) Veröffentlichungstag und Bekanntmachung des Hinweises auf die Patenterteilung: **15.03.2017**
(21) Anmeldenummer: 11173619.5
(22) Anmeldetag: 09.12.2008
(51) Int. Cl.: F01M 13/04, B01D 45/04, B01D 46/00, F01M 13/00

(54) **Ölnebelabscheider**
Oil mist separator
Filtre de blowby

(30) Priorität: 21.12.2007 DE 102007062098
(43) Veröffentlichungstag der Anmeldung: 19.10.2011
(62) Teilanmeldung aus: 08865664.0
(73) Patentinhaber: MAHLE International GmbH, 70376 Stuttgart (DE)
(72) Erfinder: Enderich, Andreas, 73734 Esslingen (DE); Feil, Michael, 95444 Bayreuth (DE); Früh, Wolfgang, 73257 Köngen (DE); Hütter, Ulrich, 73614 Schorndorf (DE); Ruppel, Stefan, 69126 Heidelberg-Emmertsgrund (DE); Sauter, Hartmut, 71272 Renningen (DE); Özkaya, Yakup, 70806 Kornwestheim (DE)
(74) Vertreter: BRP Renaud & Partner mbB Rechtsanwälte Patentanwälte Steuerberater

(56) Entgegenhaltungen:
- EP-A1- 0 860 589
- JP-A- 2002 242 645

## Beschreibung

Die vorliegende Erfindung betrifft einen Ölnebelabscheider für eine Kurbelgehäuseentlüftungseinrichtung, mit den Merkmalen des Oberbegriffs des Anspruchs 1.

Im Betrieb von Brennkraftmaschinen, die beispielsweise in Kraftfahrzeugen angeordnet sein können, gelangt über eine Leckage zwischen Kolben und Zylindern sogenanntes Blow-by-Gas in ein Kurbelgehäuse der jeweiligen Brennkraftmaschine. Um einen unzulässigen Überdruck im Kurbelgehäuse bzw. um eine Emission von Blow-by-Gas in die Umgebung zu vermeiden, kommen Kurbelgehäuseentlüftungseinrichtungen zum Einsatz. Üblicherweise verbindet eine derartige Entlüftungseinrichtung mit Hilfe einer Entlüftungsleitung das Kurbelgehäuse mit einem Frischgastrakt der Brennkraftmaschine. Im Frischgastrakt herrscht, insbesondere stromab einer Drosselklappe, ein relativer Unterdruck, der es ermöglicht, Blow-by-Gas aus dem Kurbelgehäuse anzusaugen. Im Kurbelgehäuse entsteht im Betrieb der Brennkraftmaschine ferner ein Ölnebel. Abgesaugtes Blow-by-Gas enthält somit Ölnebel. Um den Ölverbrauch der Brennkraftmaschine bzw. um die Schadstoffemissionen der Brennkraftmaschine zu reduzieren, weist eine Kurbelgehäuseentlüftungseinrichtung üblicherweise einen Ölnebelabscheider auf, der dazu dient, aus dem Blow-by-Gas, das aus dem Kurbelgehäuse abgesaugt wird, den darin mitgeführten Ölnebel abzuscheiden und einem entsprechenden Ölreservoir zuzuführen, bei dem es sich insbesondere um eine unten an das Kurbelgehäuse angebaute Ölwanne handeln kann.

Eine zunehmende Verschärfung von Schadstoffemissionsbestimmungen erfordert eine Verbesserung der Reinigungswirkung derartiger Ölnebelabscheider. Hinzu kommen sich teilweise widersprechende Anforderungen, wie z.B. eine möglichst lange wartungsfreie Lebenszeit für den Ölnebelabscheider, ein möglichst geringer Druckverlust, eine möglichst kompakte Bauform sowie ein möglichst hoher Abscheidegrad.

Aus der JP 61-159611 U3 ist ein Ölnebelabscheider für eine Kurbelgehäuseentlüftungseinrichtung bekannt, der eine erste Abscheidereinheit und eine zweite Abscheidereinheit aufweist. Die erste Abscheidereinheit besitzt einen Filterkörper, der in einem Blow-By-Gaspfad so angeordnet ist, dass er vom Blow-By-Gas durchströmbar ist. Die zweite Abscheidereinheit ist als Impactor ausgestaltet und ist in einem die erste Abscheidereinheit umgehenden Bypasspfad angeordnet. Darüber hinaus ist ein Bypassventil vorgesehen, das den Bypasspfad öffnet, sobald ein Differenzdruck an der ersten Abscheidereinheit einen vorbestimmten Wert übersteigt.

Aus der EP 0 860 589 B1 ist ein Ölnebelabscheider für eine Kurbelgehäuseentlüftungseinrichtung bekannt, der eine erste Abscheidereinheit und eine zweite Abscheidereinheit sowie ein Bypassventil aufweist. Die erste Abscheidereinheit umfasst zumindest einen Filterkörper, der in einem Blow-by-Gaspfad so angeordnet ist, dass er vom Blow-by-Gas durchströmbar ist. Die zweite Abscheidereinheit ist in einem die erste Abscheidereinheit umgehenden Bypasspfad angeordnet, der vom Bypassventil geöffnet wird, sobald ein Differenzdruck an der ersten Abscheidereinheit einen vorbestimmten Wert übersteigt. Beim bekannten Ölnebelabscheider ist die zweite Abscheidereinheit durch einen Filterkörper gebildet.

Andere Ölnebelabscheider sind z.B. aus der US 4,602,595, aus der DE 10 2005 043 198 A1, aus der JP 2005-201080 A, aus der DE 36 18 557 A1 und aus der WO 2009/025927 A bekannt.

Weitere Ölnebelabscheider, die zwar einen mit Hilfe eines Bypassventils gesteuerten Bypasspfad zur Umgebung ihrer Abscheidereinheit aufweisen, bei denen jedoch keine zusätzliche Abscheidereinheit im Bypasspfad angeordnet ist, sind aus der DE 10 2006 051 143 A1, aus der DE 10 2005 038 257 A1, aus der DE 10 2004 061 938 B3, aus der DE 10 2004 055 065 A1, aus der DE 103 59 523 A1, aus der DE 102 32 044 A1, aus der DE 197 29 439 A1, aus der WO 01/92 690 A1 und aus der DE 203 02 220 U1 bekannt.

Aus der JP 2002 242645 A ist ein Ölnebelabscheider mit einer ersten und einer zweiten Abscheidereinheit zum Abscheiden von Öl bekannt, wobei ein Bypassventil einen die zweite Abscheidereinheit umgehenden Bypasspfad öffnet, wenn eine Druckdifferent an der ersten Abscheidereinheit einen bestimmten Wert übersteigt.

Die vorliegende Erfindung beschäftigt sich mit dem Problem, für einen Ölnebelabscheider der eingangs genannten Art eine verbesserte Ausführungsform anzugeben, die sich insbesondere dadurch auszeichnet, dass sie eine vereinfachte Wartung ermöglicht, insbesondere vergleichsweise preiswert herstellbar ist und vorzugsweise bei kompakter Bauweise eine vergleichsweise lange wartungsfreie Lebenszeit besitzt, einen akzeptablen Druckverlust bietet und einen relativ hohen Abscheidegrad realisiert.

Dieses Problem wird erfindungsgemäß durch die Gegenstände der unabhängigen Ansprüche gelöst. Vorteilhafte Ausführungsformen sind Gegenstand der abhängigen Ansprüche.

Bei der Erfindung ist die zweite Abscheideeinheit als Impactor ausgestaltet. Dies ist eine besondere Form eines Trägheitsabscheiders, der üblicherweise mit einer Prallwand oder Prallplatte arbeitet, gegen die die Blow-by-Gasströmung mit Hilfe entsprechender Strömungsleitmittel gelenkt wird, um eine Umlenkung der Strömung zu bewirken. Während das Gas durch Impulsumkehr einfach von der Prallplatte abprallt und in mehr oder weniger entgegengesetzter Richtung abströmt, bleiben flüssige Partikel an der Prallwand haften, können sich daran ansammeln und abfließen. Bei einer entsprechenden Strömungsgeschwindigkeit beim Aufprall auf die Prallplatte kann auch ein solcher Impactor ähnlich günstige Abscheidegrade wie ein Filterkörper aufweisen. Bei einem Impactor besteht die Gefahr einer Gegendruckerhöhung durch allmähliches Zusetzen an sich nicht. Um den gewünschten hohen Abscheidegrad zu erzielen, benötigt der Impactor jedoch eine vergleichsweise hohe Strömungsgeschwindigkeit, die in Regel durch eine Querschnittsverengung, insbesondere durch eine Düsenbildung, realisierbar ist, was jedoch mit einem entsprechenden Gegendruckanstieg einhergeht. Bei kleinen Differenzdrücken arbeitet ein solcher Impactor also nicht oder nur unzureichend. Beim erfindungsgemäßen Ölnebelabscheider kommt der Impactor, also die zweite Abscheidereinheit jedoch nur dann zum Einsatz, wenn bereits entsprechende große Differenzdrücke herrschen. Auf diese Weise vereinigt diese Ausführungsform des Ölnebelabscheiders die Vorzüge der beiden unterschiedlichen Abscheiderprinzipien und führt dabei zu einem erhöhten Gesamtwirkungsgrad des Ölnebelabscheiders. Während die mit dem Filterkörper arbeitende erste Abscheidereinheit bei einem kleinen Volumenstrom an Blow-by-Gas eine hohe Abscheiderate ermöglicht, kann die als Impactor ausgestaltete zweite Abscheideeinheit bei großen Volumenströmen ebenfalls eine hohe Abscheiderate erzielen.

Die Erfindung beruht hierbei auf dem allgemeinen Gedanken, den Ölnebelabscheider mit wenigstens zwei parallel angeordneten Abscheidereinheiten auszustatten, von denen die erste einen vom Blow-by-Gas durchströmbaren Filterkörper aufweist und von denen die zweite druckabhängig mittels eines Bypassventils aktivierbar oder zuschaltbar ist. Der vom Blow-by-Gas durchströmbare Filterkörper zeichnet sich durch einen sehr hohen Abscheidegrad aus, da er ohne weiteres so auslegbar ist, dass er für eine Gasströmung durchlässig ist, während er für mitgeführte feste oder flüssige Partikel bis hin zu sehr kleinen Kerndurchmessern quasi undurchlässig ist. Im Vergleich zu Trägheitsabscheidern, die lediglich durch eine Strömungsumlenkung Öltröpfchen und Festkörperpartikel aus der Blow-by-Gasströmung entfernen, erfasst ein derartiger Filterkörper auch kleinere bzw. leichtere Öltröpfchen und Festkörperpartikel. Allerdings besitzen Filterkörper zumindest im Hinblick auf einfache Trägheitsabscheider einen erhöhten Strömungswiderstand. Der Durchströmungswiderstand eines derartigen Filterkörpers erhöht sich mit zunehmender Beladung des jeweiligen Filtermaterials. Abgeschiedene Feststoffpartikel lagern sich im Filtermaterial ab. Abgeschiedene Flüssigkeitströpfchen können sich im Filtermaterial zunächst anlagern und bei hinreichender Benetzung aus dem Filtermaterial wieder abfließen. Hierbei kann abströmseitig auch eine Tropfenbildung erzielt werden, wobei die sich ausbildenden Tropfen ab einer bestimmten Tropfengröße abfließen der abtropfen. Im Betrieb des Ölnebelabscheiders kann sich somit der Durchströmungswiderstand des Filterkörpers erhöhen. Um einen unzulässig hohen Durchströmungswiderstand am Filterkörper zu vermeiden, der eine erforderliche Blow-by-Gasabsaugung aus dem Kurbelgehäuse gefährden würde, ist das Bypassventil vorgesehen, das bei Erreichen eines vorbestimmten Differenzdrucks an der ersten Abscheidereinheit einen Bypass öffnet, in dem die zweite Abscheidereinheit angeordnet ist. Diese zweite Abscheidereinheit ist durch ihre Anordnung im Bypass parallel zur ersten Abscheidereinheit angeordnet. Die aktivierte zweite Abscheidereinheit arbeitet somit zusätzlich zur ersten Abscheidereinheit, wobei die Aufteilung des Blow-by-Gases auf die beiden Abscheidereinheiten von dem an der ersten Abscheidereinheit anliegenden Differenzdruck abhängt. Je größer dieser Differenzdruck ist, desto größer ist der Anteil an Blow-by-Gas, der durch den Bypasspfad und durch die zweite Abscheidereinheit strömt. Durch die parallel geschaltete und druckabhängig aktivierbare zweite Abscheidereinheit kann sichergestellt werden, dass auch bei einem zugesetzten Filterkörper der ersten Abscheidereinheit oder allgemein bei einem am Ölnebelabscheider anliegenden großen Differenzdruck eine hinreichende Blow-by-Gasmenge durch den Ölnebelabscheider strömen kann. Somit kann eine für eine funktionssichere Entlüftung des Kurbelgehäuses erforderliche Blow-by-Gasmenge zumindest in den relevanten Betriebsbereichen der Brennkraftmaschine abgesaugt werden.

Entsprechend der Erfindung ist zumindest für die erste Abscheidereinheit ein Filtereinsatz vorgesehen, der zwei Endscheiben sowie einen dazwischen angeordneten, ringförmig gestalteten Filterkörper umfasst. Dieser Filtereinsatz ist so ausgestaltet, dass er im Ölnebelabscheider austauschbar angeordnet werden kann. Im Wartungsfall kann somit der Filtereinsatz einfach gegen einen neuen Filtereinsatz ausgetauscht werden.

Besonders vorteilhaft ist eine Ausführungsform, bei welcher die Prallwand des Impactors durch einen Bereich oder Abschnitt des Filterkörpers der ersten Abscheidereinheit gebildet ist. Beispielsweise leitet ein Strömungsleitelement des Impactors die Blow-by-Gasströmung gegen einen Abschnitt der reinseitigen Oberfläche des Filterkörpers. Das Filtermaterial eignet sich in besonderer Weise zur Absorption der Ölnebelteilchen. Hierdurch ergibt sich eine Doppelfunktion für den Filterkörper.

Bei einer anderen vorteilhaften Ausführungsform kann vorgesehen sein, das Strömungsleitelement des Impactors durch einen Ventilkörper des Bypassventils zu bilden. Hierzu wird der Ventilkörper so geformt, dass er beim Öffnen des Bypass-Ventils die Strömungsleitfunktion des Strömungsleitelements übernimmt. Hierdurch erhält das Bypassventil eine Doppelfunktion. Die Ölnebelabscheider kann dadurch vergleichsweise kompakt realisiert werden.

Die Durchströmung des Filterkörpers mit Blow-by-Gas führt dazu, dass vom Filtermaterial absorbiertes Öl an der Reinseite des Filtermaterials Tröpfchen bildet und abfließt. Zum Sammeln des abfließenden Öls enthält ein Gehäuse des Ölnebelabscheiders einen Sammelraum für das Öl sowie einen Rücklauf, mit dem das Öl aus dem Sammelraum und aus dem Gehäuse herausführbar ist. Entsprechend einer besonders vorteilhaften Ausführungsform führt der Rücklauf vom Sammelraum zu einer Rohseite des Filterkörpers, so dass das Öl durch diese Rohseite aus dem Gehäuse herausführbar ist. Durch diese Bauweise kann ein an der Reinseite angeordnetes Rücklaufventil vermieden werden, das bei einem reinseitigen Rücklauf vorgesehen werden muss, um eine Ansaugung von Blow-by-Gas unter Umgehung des Ölnebelabscheiders bzw. unter Umgebung der Abscheidereinheiten zu vermeiden. Denn üblicherweise führt der Rücklauf zurück zum Kurbelgehäuse.

Entsprechend bevorzugter Weiterbildungen kann der Filtereinsatz nicht nur Komponenten der ersten Abscheidereinheit, sondern auch Komponenten der zweiten Abscheideeinheit und/oder des Bypassventils und/oder des Rücklaufs aufweisen, wodurch der Filterkörper einen hohen Integrationsgrad besitzt. Gleichzeitig führt diese Ausführungsform dazu, dass im Wartungsfall auf einfachem Weg vergleichsweise viele Komponenten des Ölnebelabscheiders in einem Arbeitsgang austauschbar sind.

Das der Erfindung zugrundeliegende Problem wird somit auch durch einen Filtereinsatz für einen Ölnebelabscheider der eingangs genannten Art gelöst.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils einen stark vereinfachten Längsschnitt durch einen Ölnebelabscheider bei unterschiedlichen Betriebszuständen (nicht Teil der Erfindung),
- Fig. 3 bis 6: jeweils einen stark vereinfachten Längsschnitt durch einen erfindungsgemäßen Ölnebelabscheider bei verschiedenen Ausführungsformen,
- Fig. 7: eine Seitenansicht eines Filtereinsatzes,
- Fig. 8: einen Längsschnitt durch den Filtereinsatz im Bereich eines Bypass-Ventils,
- Fig. 9: einen stark vereinfachten Längsschnitt durch einen Ölnebelabscheider (nicht Teil der Erfindung).

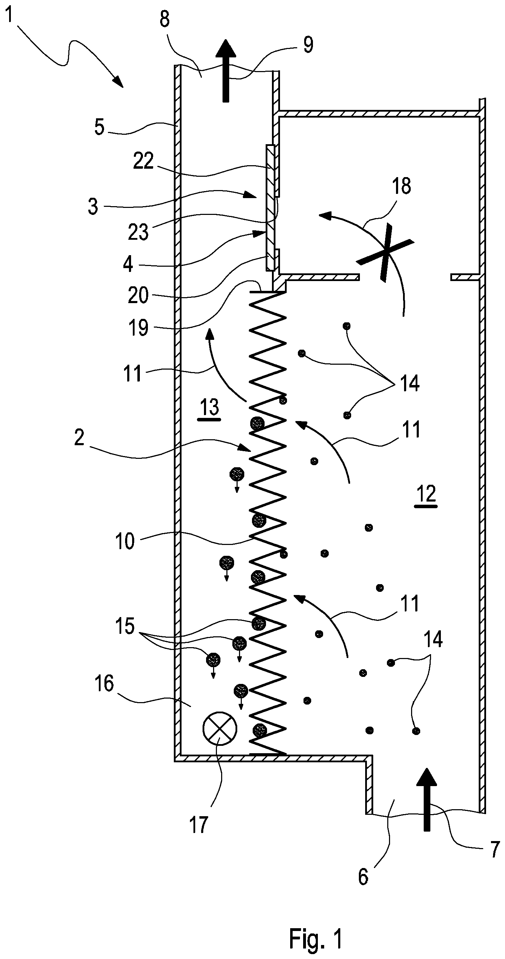

Entsprechend den Fig. 1 bis 6 umfasst ein Ölnebelabscheider 1 eine erste Abscheidereinheit 2 sowie eine zweite Abscheidereinheit 3 und ein Bypassventil 4. Der Ölnebelabscheider 1 ist für eine Verwendung in einer Kurbelgehäuseentlüftungseinrichtung vorgesehen, bzw. bildet er einen integralen Bestandteil einer derartigen Kurbelgehäuseentlüftungseinrichtung. Hierzu ist der Ölnebelabscheider 1 in eine Entlüftungsleitung eingebunden, die ein Kurbelgehäuse mit einem Frischgastrakt einer Brennkraftmaschine verbindet, die sich insbesondere in einem Kraftfahrzeug befinden kann. Mit Hilfe des im Ansaugtrakt herrschenden Unterdrucks wird Blow-by-Gas aus dem Kurbelgehäuse abgesaugt. Im Blow-by-Gas mitgeführter Ölnebel sowie gegebenenfalls mitgeführte Festkörperpartikel, wie z.B. Ruß, werden vom Ölnebelabscheider 1 aus dem Blow-by-Gas ausgeschieden. Hierzu wird der Ölnebelabscheider 1 vom Blow-by-Gas durchströmt. Ein Gehäuse 5 des Ölnebelabscheiders 1 besitzt einen Einlass 6, durch den Blow-by-Gas entsprechend einem Pfeil 7 eintritt, sowie einen Auslass 8, durch den Blow-by-Gas entsprechend einem Pfeil 9 austritt.

Die erste Abscheidereinheit 2 weist zumindest einen Filterkörper 10 auf, der aus einem für Blow-by-Gas durchlässigen Filtermaterial besteht. Beispielsweise besteht der Filterkörper 10 aus einem Vlies. Im Gehäuse 5 ist ein vom Einlass 6 zum Auslass 8 führender Blow-by-Gaspfad 11 ausgebildet, der hier durch Strömungspfeile angedeutet ist. Der Filterkörper 10 trennt im Ölnebelabscheider 1 bzw. in der ersten Abscheidereinheit 2 einen Rohraum 12 bzw. eine Rohseite 12 von einem Reinraum 13 bzw. von einer Reinseite 13. Rohseitig führt das Blow-by-Gas Ölpartikel 14 mit. Diese sollen mit Hilfe der ersten Abscheidereinheit 2 aus dem Blow-by-Gas abgeschieden werden. Hierzu ist der Filterkörper 10 in den Blow-by-Gaspfad 11 eingesetzt, und zwar so, dass er vom Blow-by-Gas durchströmbar ist. Das Blow-by-Gas muss also, wenn es dem Blow-by-Gaspfad 11 folgen will, den Filterkörper 10 durchströmen. Am Filterkörper 10 lagern sich die Ölnebelpartikel 14 an. Die Orientierung der Blow-by-Gasströmung bewirkt nun, dass sich das im Material des Filterkörpers 10 anlagernde Öl an der Reinseite 13 zu Tröpfchen 15 sammelt. Diese Tröpfchen 15 können bei Erreichen einer hinreichenden Größe vom Filterkörper 10 abfließen oder abtropfen. Die Bewegungsrichtung der freien Tröpfen 15 ist hier durch Pfeile angedeutet und ist durch die Schwerkraftrichtung vorgegeben. Das Gehäuse 5 enthält auf der Reinseite 13 einen Sammelraum 16, in dem sich das mit Hilfe der Abscheidereinheiten 2, 3 abgeschiedene Öl sammeln kann. Ein Rücklauf 17 ermöglicht dann ein Abfließen des Öls aus dem Sammelraum 16. Die zweite Abscheidereinheit 3 ist in einem Bypasspfad 18 angeordnet, der hier durch einen Pfeil symbolisiert ist und der die erste Abscheideeinheit 2 umgeht. Das Bypassventil 4 steuert den Bypasspfad 18 zumindest zum Öffnen und Schließen. Das Bypassventil 4 ist dabei so ausgestaltet, dass es in Abhängigkeit eines an der ersten Abscheideeinheit 2 anliegenden Differenzdrucks den Bypasspfad 18 öffnet bzw. schließt. Bei einem niedrigeren Differenzdruck, der unterhalb eines vorbestimmten Werts liegt, bleibt das Bypassventil 4 geschlossen, so dass kein Blow-by-Gas durch den Bypasspfad 18 strömt. Dieser Zustand ist in Fig. 1 wiedergegeben.

Sobald der Differenzdruck an der ersten Abscheideeinheit 2 den vorbestimmten Wert übersteigt, also relativ hoch ist, öffnet das Bypassventil 4, so dass in der Folge Blow-by-Gas durch den Bypasspfad 18 strömen kann. Der Differenzdruck in der ersten Abscheidereinheit 2 kann sich beispielsweise dadurch erhöhen, dass sich der Filterkörper 10 mit zunehmender Benetzung mit Öl allmählich zusetzt, wodurch sein Durchströmungswiderstand vorübergehend ansteigt. Des weiteren steigt der Durchströmungswiderstand des Filterkörpers 10 auch dadurch im Laufe der Zeit an, dass sich Festkörperpartikel, wie z.B. Ruß, im Filtermaterial einlagern, was im Unterschied zur Einlagerung flüssiger Partikel in der Regel bleibend ist. Der Filterkörper 10 setzt sich somit im Laufe der Lebensdauer des Ölnebelabscheiders 1 allmählich zu. Ferner kann der Differenzdruck auch dadurch steigen, dass seitens der Kurbelgehäuseentlüftungseinrichtung eine vergleichsweise große Blow-by-Gasmenge aus dem Kurbelgehäuse abgesaugt werden muss, wozu eine relativ hohe Druckdifferenz an die Entlüftungsleitung angelegt wird, die sich bis zum Ölnebelabscheider 1 fortpflanzt und letztlich auch an der ersten Abscheidereinheit 2 anliegt. Um auch beim vorbestimmten Wert des Differenzdrucks sowie bei höheren Differenzdrücken eine hinreichende Abführung von Blow-by-Gas aus dem Kurbelgehäuse realisieren zu können, öffnet das Bypassventil 4 ab dem genannten Wert.

Bei den Ausführungsformen der Fig. 1 bis 6 ist die zweite Abscheidereinheit 3 als Impactor ausgestaltet. Hierzu weist die zweie Abscheidereinheit 3 eine Prallwand 19 und ein Strömungsleitelement 20 auf. Das Strömungsleitelement 20 dient dazu, bei geöffnetem Bypasspfad 18 die Blow-by-Gasströmung gegen die Prallwand 19 zu leiten. An dieser Prallwand 19 prallt die Gasströmung ab und wird in die aus dem Gehäuse 5 herausführende Richtung umgelenkt. Die mitgeführten Partikel, insbesondere die Öltröpfchen 14, prallen ebenfalls gegen die Prallwand 19, bleiben jedoch daran haften, können sich daran ansammeln, Tropfen bilden und abfließen. Um die für Öl absorbierende Wirkung der Prallwand 19 zu verstärken, kann diese einen Vlieskörper aufweisen oder durch einen Vlieskörper gebildet sein.

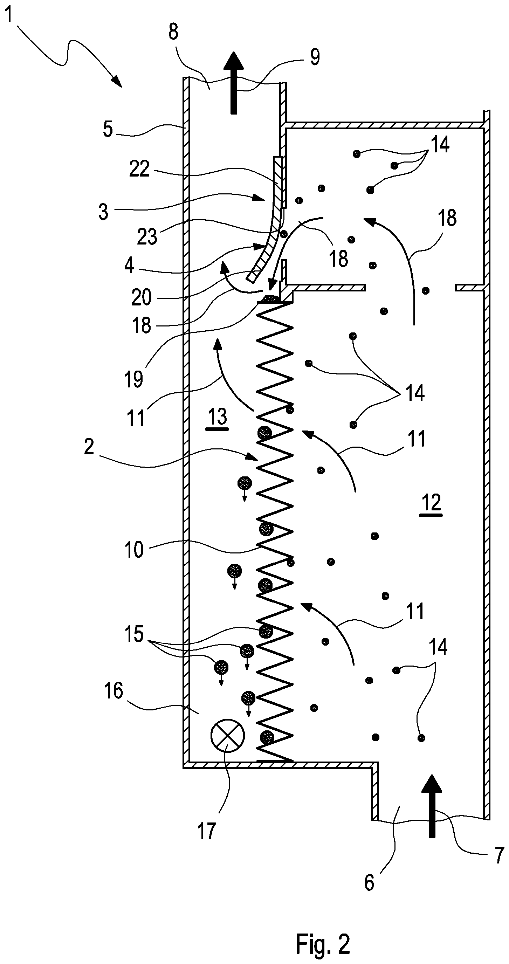

Bei der in den Fig. 1 und 2 gezeigten Ausführungsform ist die Prallwand 19 durch einen Abschnitt des Filterkörpers 10 der ersten Abscheidereinheit 2 gebildet. Rein exemplarisch ist hier die Prallwand 19 durch eine Endfalte des aus gefaltetem Filtermaterial bestehenden Filterkörpers 10 gebildet. Derartiges Filtermaterial, bei dem es sich zweckmäßig um ein Vlies handeln kann, eignet sich in besonderer Weise zur Realisierung einer derartigen Prallwand 19. Besagter Abschnitt des Filterkörpers 10, der hier die Prallwand 19 bildet, ist dabei an der Reinseite 13 angeordnet. Dementsprechend tropft das mit Hilfe der zweiten Abscheidereinheit 3 abgeschiedene Öl ebenfalls reinseitig ab und kann im Sammelraum 16 gesammelt werden und über den Rücklauf 17 abfließen.

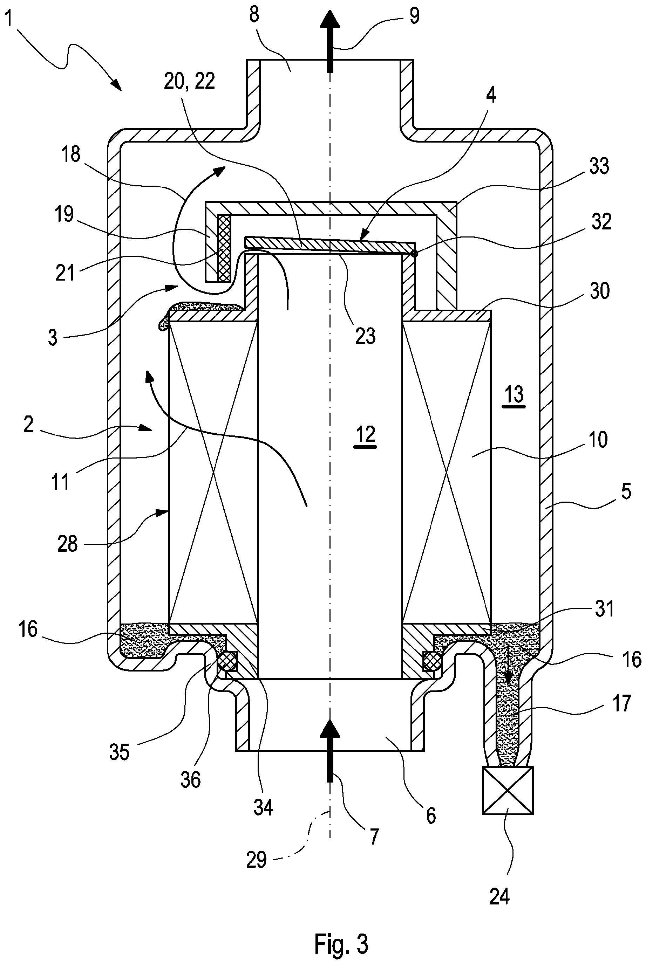

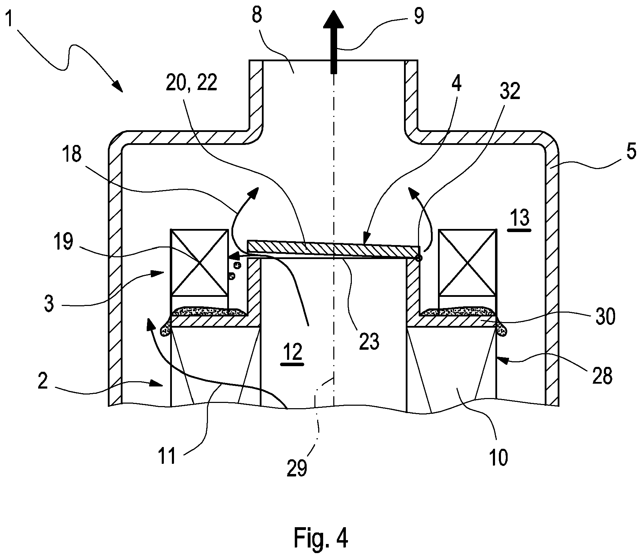

Bei den Ausführungsformen der Fig. 3 bis 6 ist die Prallwand 19 ein bezüglich des Filterkörpers 10 der ersten Abscheidereinheit 2 separates Bauteil. Bei der in den Fig. 3, 5 und 6 gezeigten Ausführungsform ist die Prallwand 19 mit einem separaten Vlieskörper 21 ausgestattet, der von der mit Hilfe des Strömungsleitelements 20 geleiteten Blow-by-Gasströmung beaufschlagt wird. Bei der in Fig. 4 gezeigten Ausführungsform ist die komplette Prallwand 19 durch einen Vlieskörper gebildet.

Zumindest bei den Ausführungsformen der Fig. 1 bis 6 weist das Bypassventil 4 einen Ventilkörper 22 auf, der durch Federkraft in seine Schließstellung vorgespannt ist und der der Druckdifferenz, die an der ersten Abscheideeinheit 2 anliegt, ausgesetzt ist. Dementsprechend betätigt besagte Druckdifferenz den Ventilkörper 22. Der Ventilkörper 22 wirkt mit einer Bypassöffnung 23 zusammen, um diese zu öffnen und zu schließen beziehungsweise zu steuern. In den Beispielen der Fig. 1 bis 6 ist der Ventilkörper 22 als Blattfeder ausgestaltet. Andere Ausführungsformen, wie zum Beispiel eine in Schließrichtung federbelastete Klappe, sind ebenfalls denkbar.

Besonders vorteilhaft sind die hier gezeigten Ausführungsformen, bei denen das Strömungsleitelement 20 des Impactors beziehungsweise der zweiten Abscheidereinheit 3 durch den Ventilkörper 22 des Bypassventils 4 gebildet ist. Der Ventilkörper 22 ist bei den hier gezeigten Ausführungsformen so gestaltet, dass er beim Öffnen der Bypassöffnung 23 die Strömungsleitfunktion des Strömungsleitelements 20 übernimmt und somit die Blow-by-Gasströmung bei geöffnetem Blow-by-Gaspfad 18 gegen die Prallwand 19 leitet. Der Ventilkörper 22 öffnet hier somit die Bypassöffnung 23 gezielt so, dass die sich ausbildende Blow-by-Gasströmung gegen die Prallwand 19 trifft.

Wie bereits weiter oben erläutert führt der Rücklauf 17 das sich im Sammelraum 16 sammelnde Öl aus dem Gehäuse 5 heraus. Gemäß Fig. 3 kann dieser Rücklauf 17 auf der Reinseite 13 des Filterkörpers 10 bleiben. Im Rücklauf 17 ist dann ein hier nur symbolisch angedeutetes Rücklaufventil 24 anzuordnen, um die Ansaugung einer Gasströmung unter Umgehung der Abscheidereinheiten 2, 3 zu vermeiden.

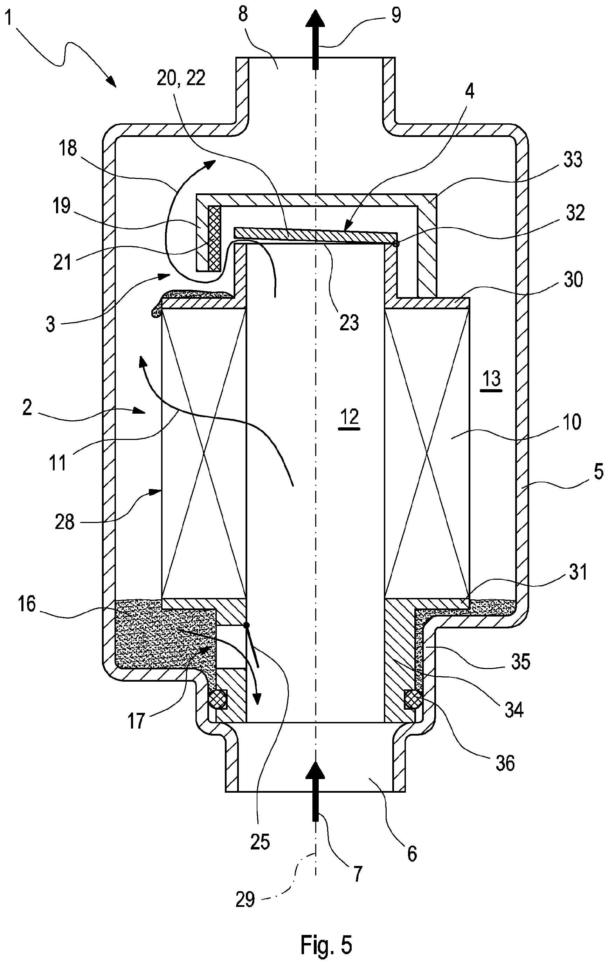

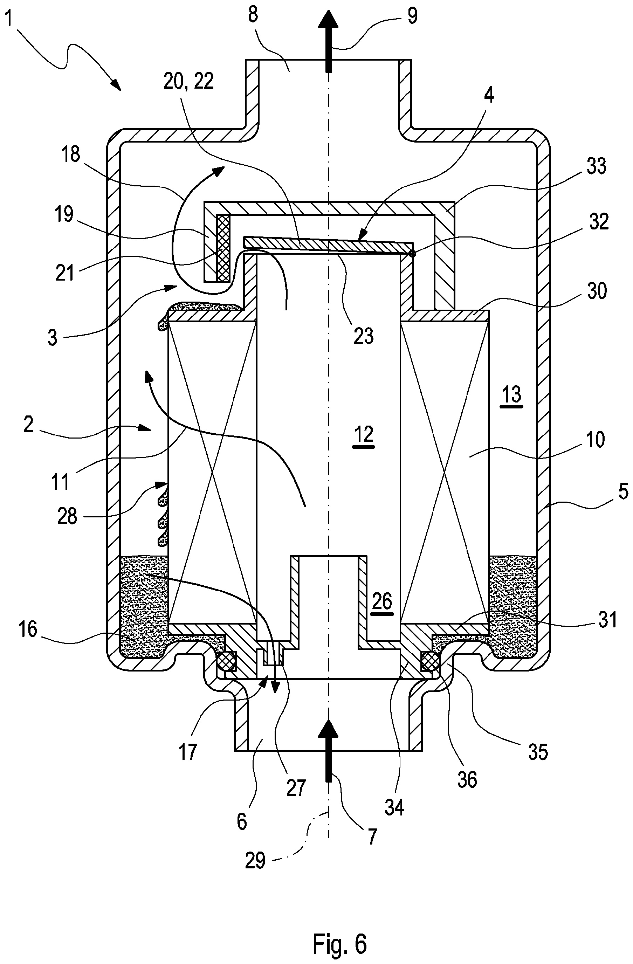

Die Fig. 5 und 6 zeigen eine bevorzugte Ausführungsform, bei welcher der Rücklauf 17 vom Sammelraum 16 zur Rohseite 12 des Filterkörpers 10 führt. In der Folge kann der Rücklauf 17 das Öl durch diese Rohseite 12 aus dem Gehäuse 5 herausführen. Der Rücklauf 17 führt in der Regel ohnehin zum Kurbelgehäuse zurück. Da die Rohseite 12 des Filterkörpers 10 mit dem Einlass 6 des Gehäuses 5 kommuniziert, gelangt das Öl von der Rohseite 12 bei einer entsprechenden Leitungsverlegung automatisch wieder zurück in das Kurbelgehäuse. Somit kann auf eine externe Rücklaufleitung verzichtet werden.

Bei der in Fig. 5 gezeigten Ausführungsform weist der Rücklauf 17 ein Rücklaufventil 25 auf. Dieses Rücklaufventil 25 ist dabei so ausgestaltet, dass es ein Abfließen von Öl aus dem Sammelraum 16 zur Rohseite 12 ermöglicht, während es ein Ansaugen von Blow-by-Gas aus der Rohseite 12 verhindert.

Der Sammelraum 16, der sich an der Reinseite 13 des Filterkörpers 10 befindet, ist bei der in Fig. 6 gezeigten Ausführungsform zumindest teilweise durch den Filterkörper 10 begrenzt. Der Rücklauf 17 führt hier durch den Filterkörper 10 hindurch. Die Blow-by-Gasströmung treibt das sich im Filtermaterial sammelnde Öl auf die Reinseite 13 und bewirkt, dass sich dort größere Tropfen bilden, die entlang des Filtermaterials beziehungsweise entlang des Filterkörpers 10 schwerkraftbedingt nach unten abfließen können. Im Sammelraum 16 steigt das Öl entlang des Filterkörpers 10 an, wodurch ein Staudruck in einem unteren Bereich des Filterkörpers 10 entsprechend zunimmt. Gleichzeitig behindert der Ölpegel im Sammelraum 16 die Durchströmung dieses unteren Bereichs des Filterkörpers 10 mit Blow-by-Gas. Hierdurch kann Öl durch das Filtermaterial hindurchgedrückt werden, so dass es entgegen der Strömungsrichtung des Blow-by-Gases durch den Filterkörper 10 fließt und so zur Rohseite 12 gelangt. Bei dieser Ausführungsform kann auf ein Rücklaufventil 25, wie es bei der in Fig. 5 gezeigten Ausführungsform noch vorhanden ist, verzichtet werden.

Fig. 6 zeigt eine weitere Besonderheit, bei welcher der Rücklauf 17 auf der Rohseite 12 des Filterkörpers 10 einen Sammelkanal 26 aufweist. In diesen Sammelkanal 26 kann das über den Rücklauf 17 zur Rohseite 12 gelangende Öl gesammelt werden. Dieser Sammelkanal 26 ist mit wenigstens einem Ablauf 27 ausgestattet, der hier als Ablaufstutzen ausgestaltet ist. Durch diesen Ablauf 27 kann das Öl aus dem Sammelkanal 26 wieder austreten. Beispielsweise tropft das Öl durch den Ablauf 27 und somit durch den Einlass 6 aus dem Gehäuse 5 heraus. Bei der in Fig. 6 gezeigten Ausführungsform ist besagter Sammelkanal 26 mit der Variante kombiniert, bei der der Rücklauf 17 durch den Filterkörper 10 hindurchführt. Es ist klar, dass der Sammelkanal 26 beispielsweise auch mit der in Fig. 5 gezeigten Variante kombinierbar ist, bei welcher der Rücklauf 17 das Rücklaufventil 25 aufweist.

Entsprechend den Fig. 1 und 2 kann der Filterkörper 10 der ersten Abscheidereinheit 2 nach Art eines Plattenfilters ausgestaltet sein. Der Filterkörper 10 kann dabei fest in den Ölnebelabscheider 1 eingebaut sein. Ebenso kann der Filterkörper 10 austauschbar im Ölnebenalbscheider 1 angeordnet sein.

Im Unterschied zu den Fig. 1 und 2 zeigen die Fig. 3 bis 6 eine Ausführungsform, bei welcher die erste Abscheidereinheit 2 einen Filtereinsatz 28 aufweist, der austauschbar im Ölnebelabscheider 1 beziehungsweise in dessen Gehäuse 5 angeordnet ist. Besagter Filtereinsatz 28 umfasst den Filterkörper 10, der hierzu ringförmig ausgestaltet ist. Eine Längsmittelachse des Filtereinsatzes 28 ist hier mit 29 bezeichnet. Bezüglich dieser Längsmittelachse 29 umfasst der Filtereinsatz 28 zwei axiale Endscheiben 30 und 31, die im Folgenden entsprechend ihrer Einbaulage gemäß den Fig. 3 bis 6 auch als obere Endscheibe 30 und untere Endscheibe 31 bezeichnet werden können. Axial zwischen diesen beiden Endscheiben 30, 31 befindet sich der Filterkörper 10. Zweckmäßig ist der Filterkörper 10 mit den Endscheiben 30, 31 verschweißt oder verklebt oder darin einplastifiziert. Durch den austauschbaren Filtereinsatz 28 wird eine einfache Möglichkeit geschaffen, im Rahmen eines Wartungsintervalls den Filtereinsatz 28 zu tauschen, wodurch zumindest der Filterkörper 10 erneuert werden kann.

Entsprechend den hier gezeigten Ausführungsformen lassen sich in den Filtereinsatz 28 zusätzliche Komponenten und/oder Funktionalitäten des Ölnebelabscheiders 1 integrieren. Die nachfolgende Aufzählung ist rein exemplarisch, insbesondere können die genannten Merkmale zusätzlich oder alternativ am Filtereinsatz 28 realisiert werden. Bei den hier gezeigten Ausführungsformen ist zum Beispiel das Bypassventil 4 am Filtereinsatz 28 ausgebildet. Bei den Beispielen der Fig. 3 bis 6 handelt es sich beim Bypassventil 4 im wesentlichen um den als Blattfeder ausgestalteten Ventilkörper 22. Ebenso kann der Ventilkörper 22 ein plattenförmiges Bauteil sein, das bei 32 um eine Schwenkachse verschwenkbar ist und beispielsweise mittels einer hier nicht dargestellten Schenkelfeder in seine Schließstellung vorgespannt ist. Bei diesen Ausführungsformen ist außerdem der Bypasspfad 18 zur Umgehung des Filterkörpers 10 in den Filtereinsatz 28 integriert. Das Bypassventil 4 ist hier an der oberen Endscheibe 30 ausgebildet und wirkt mit einer zentralen Öffnung, nämlich der Bypassöffnung 23 zusammen, die ebenfalls in der oberen Endscheibe 30 ausgebildet ist. Der Bypasspfad 18 führt dabei durch diese Bypassöffnung 23, also durch die obere Endscheibe 30. Bei den Ausführungsformen der Fig. 3, 5 und 6 ist die Prallwand 19 über einen Träger 33 an der oberen Endscheibe 30 angebracht. Auf diese Weise ist auch die Prallwand 19 integral am Filtereinsatz 28 ausgebildet. Da auch hier das Strömungsleitelement 20 und der Ventilkörper 22 durch ein gemeinsames Bauteil gebildet sind, ist auch der gesamte Impactor beziehungsweise die ganze zweite Abscheidereinheit 3 am Filtereinsatz 28 ausgebildet.

Entsprechend den Fig. 3, 5 und 6 ist an der unteren Endscheibe 31 ein Stutzen 34 ausgebildet, mit dem der Filtereinsatz 28 in eine im Gehäuse 5 ausgebildete, entsprechende Stutzenaufnahme 35 eingesetzt ist. Hierzu kann am Stutzen 34 eine Dichtung 36 angeordnet sein. Bei der in Fig. 5 gezeigten Ausführungsform ist an diesem Stutzen 34 das Rücklaufventil 25 ausgebildet. Der Stutzen 34 dient hier zur Begrenzung des Sammelraums 16 und enthält das Rücklaufventil 25, so dass der Rücklauf 17 durch den Stutzen 34 hindurchgeführt ist. Bei der in Fig. 6 gezeigten Ausführungsform ist der Sammelkanal 26 am Filtereinsatz 28 ausgebildet. Beispielsweise ist der Sammelkanal 26 an der unteren Endscheibe 31 angebracht.

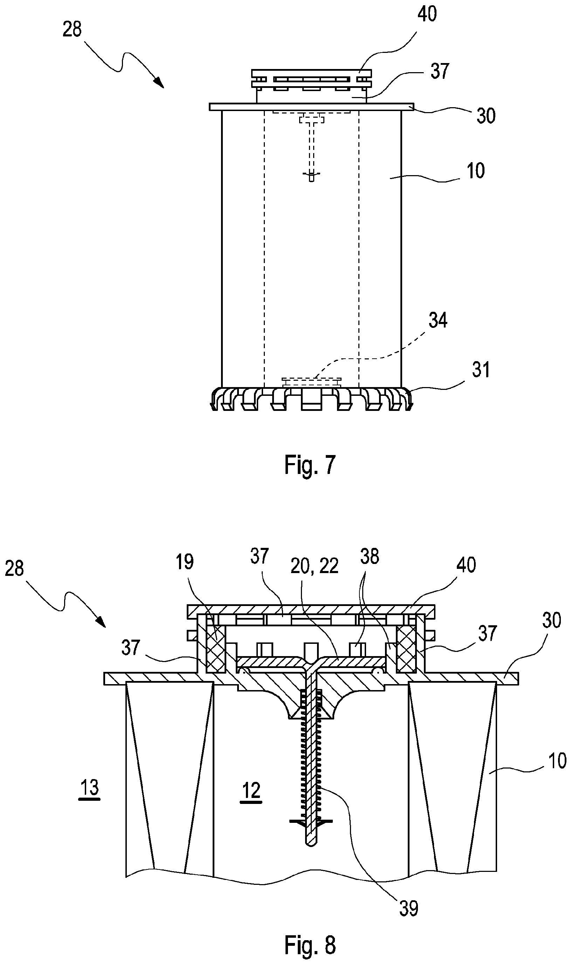

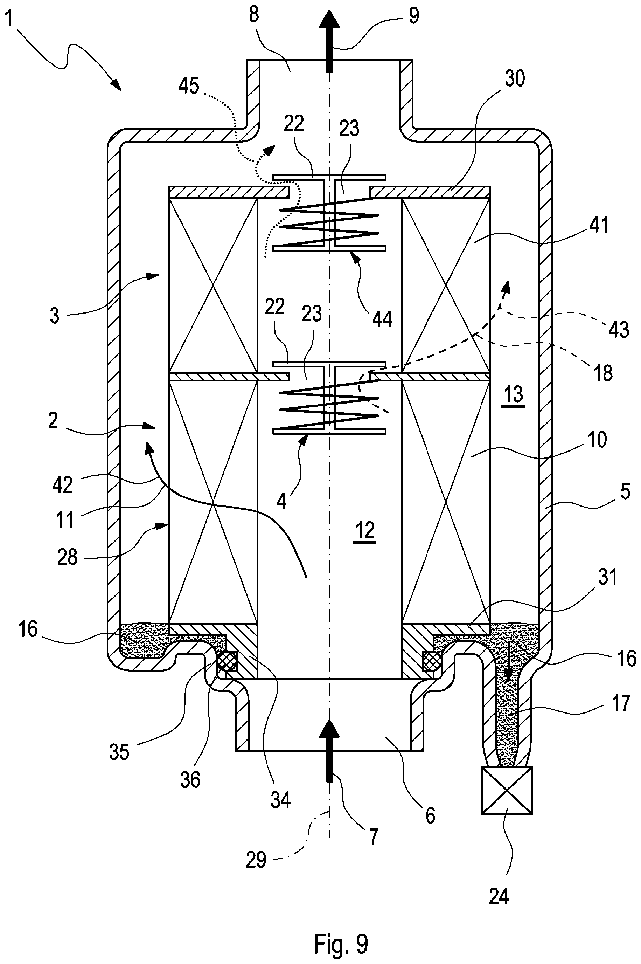

Die Fig. 7 und 8 zeigen weitere Ausführungsformen für den Filtereinsatz 28. Auch hier ist die Prallwand 19 durch einen Vlieskörper gebildet, der radial außen an einem Ring 37 beziehungsweise an Stegen 37 abgestützt ist, der oder die von der oberen Endscheibe 30 abgehen. Radial innen ist der die Prallwand 19 bildende Vlieskörper an weiteren Stegen 38 abgestützt, die ebenfalls von der oberen Endscheibe 30 ausgehen. Der Ventilkörper 22 ist hier tellerförmig ausgestaltet und ist mit einer Rückstellfeder 39 in seine dargestellte Schließposition vorgespannt. Die inneren Stege 38 bilden gleichzeitig eine äußere Führung für den Ventilkörper 20. Hierdurch kann der Ventilkörper 20 eine geführte axiale Hubbewegung durchführen. Sobald der Ventilkörper 22 bei einem entsprechenden Differenzdruck von seinem Sitz abhebt, dient er gleichzeitig als Strömungsleitelement 20 der als Impactor ausgestalteten zweiten Abscheidereinheit 3. Im Beispiel ist außerdem eine Abdeckung 40 vorgesehen, die auf die äußeren Stege 37 aufgeclipst ist und die eine axiale Sicherung der durch den Vlieskörper gebildeten Prallplatte 19 realisiert. Die Prallplatte 19 ist hier ringförmig gestaltet. Entsprechend Fig. 9 kann bei einer anderen Ausführungsform des Ölnebelabscheiders 1 die zweite Abscheidereinheit 3 ebenfalls zumindest einen Filterkörper 41 aufweisen, der im Bypasspfad 18 dann so angeordnet ist, dass er vom Blow-by-Gas durchströmbar ist. Grundsätzlich kann der weitere Filterkörper 41 aus dem gleichen Filtermaterial hergestellt sein wie der Filterkörper 10 der ersten Abscheidereinheit 2. Innerhalb des Gehäuses 5 ist in Fig. 9 die normale Blow-by-Gasströmung, die bei geschlossenem Bypassventil 4 vorherrscht und die durch die erste Abscheidereinheit 2 strömt, durch einen Pfeil 44 mit durchgezogener Linie dargestellt. Die Blow-by-Gasströmung bei geöffnetem Bypassventil 4 ist durch einen Pfeil 43 mit unterbrochener Linie dargestellt. In diesem Fall strömt das Blow-by-Gas zusätzlich oder alternativ durch den Filterkörper 41 der zweiten Abscheidereinheit 3. Fig. 9 zeigt eine besondere Ausführungsform, bei welcher ein weiterer Bypass zur Umgehung der zweiten Abscheidereinheit 3 vorgesehen ist, der ebenfalls mit Hilfe eines weiteren Bypassventils 44 in Abhängigkeit der Druckdifferenz an der zweiten Abscheidereinheit 3 gesteuert ist. Eine Blow-by-Gasströmung durch diesen weiteren Bypass bei geöffnetem weiterem Bypassventil 44 ist in Fig. 9 durch einen Pfeil 45 mit gepunkteter Linie dargestellt. Grundsätzlich lassen sich so beliebig viele Abscheidereinheiten 2, 3 kaskadierend aneinander reihen. Insbesondere lässt sich hierfür ein modularer Aufbau für den Filtereinsatz 28 vorstellen, bei dem je nach Anforderung zwei oder mehr Abscheidereinheiten 2, 3 zusammengesetzt werden.

Bei der in Fig. 9 gezeigten Ausführungsform ist das jeweilige Bypassventil 4 beziehungsweise 44 jeweils wieder mit einem federbelasteten Ventilglied 22 ausgestattet. Alternativ sind auch andere Ausführungsformen für den Ventilkörper 22 denkbar. Beispielsweise kann dieser auch als Tellerfeder ausgestaltet sein.

## Patentansprüche

1. Ölnebelabscheider für eine Kurbelgehäuseentlüftungseinrichtung,
- mit einer ersten Abscheidereinheit (2), die zumindest einen Filterkörper (10) aufweist, der in einem Blow-by-Gaspfad (11) so angeordnet ist, dass er vom Blow-by-Gas durchströmbar ist,
- mit einer zweiten Abscheidereinheit (3), die als Impactor ausgestaltet und in einem die erste Abscheidereinheit (2) umgehenden Bypasspfad (18) angeordnet ist,
- mit einem Bypassventil (4), das den Bypasspfad (18) öffnet, sobald ein Differenzdruck an der ersten Abscheidereinheit (2) einen vorbestimmten Wert übersteigt,
- wobei die erste Abscheidereinheit (2) einen Filtereinsatz (28) aufweist, der zwei Endscheiben (30, 31) und dazwischen den ringförmig gestalteten Filterkörper (10) umfasst und der austauschbar im Ölnebelabscheider (1) angeordnet ist,
- wobei in einem Gehäuse (5) des Ölnebelabscheiders (1) ein Sammelraum (16) ausgebildet ist, der sich an einer Reinseite (13) des Filterkörpers (10) der ersten Abscheidereinheit (2) befindet und in dem sich das aus dem Blow-by-Gas mit der ersten Abscheidereinheit (2) und/oder mit der zweiten Abscheidereinheit (3) abgeschiedene Öl sammelt,
**dadurch gekennzeichnet,**
**dass** die als Impactor ausgestaltete zweite Abscheidereinheit (3) eine Prallwand (19) aufweist, die über einen Träger (33, 37, 38) an der vom Sammelraum (16) abgewandten Endscheibe (30, 31) angebracht ist.

2. Ölnebelabscheider nach Anspruch 1,
**dadurch gekennzeichnet,**
**dass** der Bypasspfad (18) und das Bypassventil (4) am Filtereinsatz (28) ausgebildet sind.

3. Ölnebelabscheider nach Anspruch 1 oder 2,
**dadurch gekennzeichnet,**
**dass** die zweite Abscheidereinheit (3) eine Prallwand (19) sowie ein Strömungsleitelement (20) aufweist, das die Blow-by-Gasströmung bei geöffnetem Blow-by-Gaspfad (18) gegen die Prallwand (19) leitet.

4. Ölnebelabscheider nach Anspruch 3,
**dadurch gekennzeichnet,**
**dass** die Prallwand (19) einen Vlieskörper (21) aufweist oder durch einen Vlieskörper gebildet ist.

5. Ölnebelabscheider nach Anspruch 3 oder 4,
**dadurch gekennzeichnet,**
**dass** das Strömungsleitelement (20) durch einen Ventilkörper (22) des Bypassventils (4) gebildet ist.

6. Ölnebelabscheider nach einem der Ansprüche 1 bis 5,
**dadurch gekennzeichnet,**
**dass** das Bypassventil (4) einen Ventilkörper (22) aufweist, der als Blattfeder oder als Tellerfeder oder als federbelastetes Ventilglied ausgestaltet ist.

7. Ölnebelabscheider nach Anspruch einem der Ansprüche 1 bis 6,
**dadurch gekennzeichnet,**
**dass** ein Rücklauf (17) vorgesehen ist, mit dem das im Sammelraum (16) gesammelte Öl aus dem Gehäuse (5) herausführbar ist.

8. Ölnebelabscheider nach Anspruch 7,
**dadurch gekennzeichnet,**
**dass** der Rücklauf (17) vom Sammelraum (16) zu einer Rohseite (12) des Filterkörpers (10) der ersten Abscheidereinheit (2) führt, so dass das Öl durch diese Rohseite (12) aus dem Gehäuse (5) herausführbar ist.

9. Ölnebelabscheider nach Anspruch 7 oder 8,
**dadurch gekennzeichnet,**
**dass** der Rücklauf (17) ein Rücklaufventil (25) aufweist, das ein Abfließen von Öl zur Rohseite (12) ermöglicht und ein Ansaugen von Blow-by-Gas aus der Rohseite (12) verhindert.

10. Ölnebelabscheider nach einem der Ansprüche 7 bis 9,
**dadurch gekennzeichnet,**
**dass** der Sammelraum (16) zumindest teilweise durch den Filterkörper (10) der ersten Abscheidereinheit (2) begrenzt ist, so dass der Rücklauf (17) durch den Filterkörper (10) hindurchführt.

11. Ölnebelabscheider nach einem der Ansprüche 7 bis 10,
**dadurch gekennzeichnet,**
**dass** der Rücklauf (17) auf der Rohseite (12) einen Sammelkanal (26) für Öl aufweist, der zumindest einen Ablauf (27) aufweist, durch den das Öl den Sammelkanal (26) verlässt.

12. Ölnebelabscheider nach einem der Ansprüche 1 bis 11,
**dadurch gekennzeichnet,**
**dass** am Filtereinsatz (28) zumindest eine der folgenden Komponenten ausgebildet ist: das Strömungsleitelement (20), der Vlieskörper (21), der Ventilkörper (22), die Blattfeder, die Tellerfeder, das federbelastete Ventilglied, zumindest ein Teil des Rücklaufs (17), das Rücklaufventil (25), der Sammelkanal (26).

13. Ölnebelabscheider nach einem der Ansprüche 1 bis 12,
**dadurch gekennzeichnet,**
**dass** der Träger (33, 37, 38) als ein Ring (37) oder durch Stege (37, 38) ausgebildet ist.

14. Ölnebelabscheider nach einem der Ansprüche 1 bis 13,
**dadurch gekennzeichnet,**
**dass** der Träger (33, 37, 38) von der Endscheibe (30, 31) absteht, insbesondere integral mit der Endscheibe (30, 31) ausgeformt ist.

15. Filtereinsatz für einen Ölnebelabscheider nach einem der Ansprüche 1 bis 14.

## Claims

1. Oil mist separator for a crankcase ventilation device,
- with a first separator unit (2) having at least one filter body (10), which is disposed in a blow-by gas path (11) so that blow-by gas can flow through it,
- with a second separator unit (3) which is designed as an impactor and disposed into a bypass path (18) circumventing a first separator unit (2),
- with a bypass valve (4), which opens the bypass path (18) when a differential pressure on the first separator unit (2) exceeds a predetermined value,
- wherein the first separator unit (2) has a filter insert (28) comprising two end plates (30, 31) and in between comprising the ring-shaped filter body (10) which is disposed interchangeably in the oil mist separator (1),
- wherein in a housing (5) of the oil mist separator (1) a collecting chamber (16) is arranged, which is located at a clean side (13) of the filter body (10) of the first separator unit (2) and in which it gathers separated oil from the blow-by-gas with the first separator unit (2) and/or with the second separator unit (3),
**characterized**
**in that** the second separator unit (3) designed as an impactor has a baffle wall (19) which is mounted over a support (33, 37, 38) on the collecting chamber (16) facing away from the end plate (30, 31).

2. Oil mist separator according to claim 1,
**characterized**
**in that** the bypass path (18) and the bypass valve (4) are arranged on the filter insert (28).

3. Oil mist separator according to claim 1 or 2,
**characterized**
**in that** the second separator unit (3) has a baffle wall (19) and a flow guide element (20) which, with an open blow-by gas path (18), leads the blow-by gas flow forwards against the baffle wall (19).

4. Oil mist separator according to claim 3,
**characterized**
**in that** the baffle wall (19) has a web body (21) or is formed by a web body.

5. Oil mist separator according to claim 3 or 4,
**characterized**
**in that** the flow guide element (20) is formed by a valve body (22) of the bypass valve (4).

6. Oil mist separator according to any one of claims 1 to 5,
**characterized**
**in that** the bypass valve (4) has a valve body (22) which is designed as a leaf spring or a plate spring or a spring-loaded valve member.

7. Oil mist separator according to any one of claims 1 to 6,
**characterized**
**in that** a return pipe (17) is provided, with which the oil collected in the collecting chamber (16) can be led out from the housing (5).

8. Oil mist separator according to claim 7,
**characterized**
**in that** the return pipe (17) from the collecting chamber (16) leads to an unfiltered side (12) of the filter body (10) of the first separator unit (2), so that the oil can be led out through this unfiltered side (12) of the housing (5).

9. Oil mist separator according to claim 7 or 8,
**characterized**
**in that** the return pipe (17) has a return valve (25), which allows drainage of oil to the unfiltered side (12) and prevents suction of blow-by gas from the unfiltered side (12).

10. Oil mist separator according to any one of claims 7 to 9,
**characterized**
**in that** the collecting chamber (16) is limited at least partially by the filter body (10) of the first separator unit (2), so that the return pipe (17) passes through the filter body (10).

11. Oil mist separator according to any one of claims 7 to 10,
**characterized**
**in that** the return pipe (17) at the unfiltered side (12) has a collecting channel (26) for oil, which has at least one outlet (27) through which oil leaves the collecting channel (26).

12. Oil mist separator according to any one of claims 1 to 11,
**characterized**
**in that** at the filter insert (28) at least one of the following components is arranged: the flow guide element (20), the web body (21), the valve body (22), the leaf spring, the plate spring, the spring-loaded valve member, at least a part of the return pipe (17), the return valve (25), the collecting channel (26).

13. Oil mist separator according to any one of claims 1 to 12,
**characterized**
**in that** the support (33, 37, 38) is arranged as a ring (37) or by separators (37, 38).

14. Oil mist separator according to any one of claims 1 to 13,
**characterized**
**in that** the support (33, 37, 38) projects from the end plate (30, 31), in particular, is arranged integrally with the end plate (30, 31).

15. Filter insert for an oil mist separator according to any one of claims 1 to 14.

## Revendications

1. Séparateur de vapeur d'huile pour un dispositif de purge d'air de carter-moteur, comprenant
- une première unité de séparateur (2), qui présente au moins un corps filtrant (10), qui est disposé sur un trajet de gaz de blow-by (11) de telle sorte qu'il peut être traversé par le gaz de blow-by,
- une deuxième unité de séparateur (3), qui est configurée comme un impacteur et qui est disposée sur un trajet de dérivation (18) contournant la première unité de séparateur (2),
- une soupape de dérivation (4), qui ouvre le trajet de dérivation (18) dès qu'une pression différentielle sur la première unité de séparateur (2) dépasse une valeur prédéterminée,
- dans lequel la première unité de séparateur (2) présente une cartouche filtrante (28), qui comprend deux disques d'extrémité (30, 31) et, de manière intercalée, le corps filtrant (10) configuré de manière à présenter une forme annulaire et qui est disposée de manière remplaçable dans le séparateur de vapeur d'huile (1),
- dans lequel un espace collecteur (16) est réalisé dans un carter (5) du séparateur de vapeur d'huile (1), lequel espace collecteur se trouve sur un côté pur (13) du corps filtrant (10) de la première unité de séparateur (2) et dans lequel est collectée l'huile séparée du gaz de blow-by à l'aide de la première unité de séparateur (2) et/ou à l'aide de la deuxième unité de séparateur (3),
**caractérisé en ce**
**que** la deuxième unité de séparateur (3) configurée comme un impacteur présente une chicane (19), qui est installée, par l'intermédiaire d'un support (33, 37, 38), sur le disque d'extrémité (30, 31) opposé à l'espace collecteur (16).

2. Séparateur de vapeur d'huile selon la revendication 1,
**caractérisé en ce**
**que** le trajet de dérivation (18) et la soupape de dérivation (4) sont réalisés sur la cartouche filtrante (28).

3. Séparateur de vapeur d'huile selon la revendication 1 ou 2,
**caractérisé en ce**
**que** la deuxième unité de séparateur (3) présente une chicane (19) ainsi qu'un élément de guidage d'écoulement (20), qui guide l'écoulement de gaz de blow-by contre la chicane (19) lorsque le trajet de gaz de blow-by (18) est ouvert.

4. Séparateur de vapeur d'huile selon la revendication 3,
**caractérisé en ce**
**que** la chicane (19) présente un corps non tissé (21) ou est formée par un corps non tissé.

5. Séparateur de vapeur d'huile selon la revendication 3 ou 4,
**caractérisé en ce**
**que** ledit élément de guidage d'écoulement (20) est formé par un corps de soupape (22) de la soupape de dérivation (4).

6. Séparateur de vapeur d'huile selon l'une quelconque des revendications 1 à 5, **caractérisé en ce**
**que** la soupape de dérivation (4) présente un corps de soupape (22), qui est configuré comme un ressort à lames ou comme une rondelle Belleville ou comme un élément de soupape chargé par ressort.

7. Séparateur de vapeur d'huile selon l'une quelconque des revendications 1 à 6,
**caractérisé en ce**
**qu'**une conduite de retour (17) est prévue, à l'aide de laquelle l'huile collectée dans ledit espace collecteur (16) peut être évacuée du carter (5).

8. Séparateur de vapeur selon la revendication 7,
**caractérisé en ce**
**que** la conduite de retour (17) mène de l'espace collecteur (16) à un côté brut (12) du corps filtrant (10) de la première unité de séparateur (2) de sorte que l'huile puisse être évacuée du carter (5) par ledit côté brut (12).

9. Séparateur de vapeur d'huile selon la revendication 7 ou 8,
**caractérisé en ce**
**que** la conduite de retour (17) comprend une soupape de retour (25), qui permet une évacuation de l'huile en direction du côté brut (12) et qui empêche une aspiration du gaz de blow-by hors du côté brut (12).

10. Séparateur de vapeur d'huile selon l'une quelconque des revendications 7 à 9,
**caractérisé en ce**
**que** l'espace collecteur (16) est délimité au moins en partie par le corps filtrant (10) de la première unité de séparateur (2) de sorte que la conduite de retour (17) mène à travers le corps filtrant (10).

11. Séparateur de vapeur d'huile selon l'une quelconque des revendications 7 à 10,
**caractérisé en ce**
**que** la conduite de retour (17) présente, sur le côté brut (12), un canal collecteur (26) pour l'huile, qui présente au moins une évacuation (27), par laquelle l'huile quitte le canal collecteur (26).

12. Séparateur de vapeur d'huile selon l'une quelconque des revendications 1 à 11,
**caractérisé en ce**
**qu'**au moins un des composants qui suivent est réalisé sur la cartouche filtrante (28) : l'élément de guidage d'écoulement (20), le corps non tissé (21), le corps de soupape (22), le ressort à lames, le ressort Belleville, l'élément de soupape chargé par ressort, au moins une partie de la conduite de retour (17), la soupape de retour (25), le canal collecteur (26).

13. Séparateur de vapeur d'huile selon l'une quelconque des revendications 1 à 12,
**caractérisé en ce**
**que** le support (33, 37, 38) est réalisé comme une bague (37) ou par des entretoises (37, 38).

14. Séparateur de vapeur d'huile selon l'une quelconque des revendications 1 à 13,
**caractérisé en ce**
**que** le support (33, 37, 38) dépasse du disque d'extrémité (30, 31), en particulier est formé d'un seul tenant avec le disque d'extrémité (30, 31).

15. Cartouche filtrante pour un séparateur de vapeur d'huile selon l'une quelconque des revendications 1 à 14.
